(19) Europäisches Patentamt
European Patent Office
Office européen des brevets

(11) EP 2 891 680 B1

# (12) EUROPEAN PATENT SPECIFICATION

(45) Date of publication and mention of the grant of the patent:
**08.03.2017 Bulletin 2017/10**

(51) Int Cl.:
*C08L 23/04* (2006.01) *C08L 23/06* (2006.01)

(21) Application number: **14150219.5**

(22) Date of filing: **06.01.2014**

## (54) Polymer blend: HDPE with ethylene-norbornene or propylene-norbornene copolymer

Polymermischung mit Ethylene-Norbornene oder Propylene-Norbornene Copolymer

Mélange de polymères avec ethylene-norbornene ou propylene-norbornene copolymer

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.07.2015 Bulletin 2015/28**

(73) Proprietor: **Borealis AG**
**1220 Vienna (AT)**

(72) Inventors:
- **Prades, Floran**
  **4040 Linz (AT)**
- **Cheng, Joy**
  **4020 Linz (AT)**

(74) Representative: **Campbell, Neil Boyd**
**Dehns**
**St Bride's House**
**10 Salisbury Square**
**London**
**EC4Y 8JD (GB)**

(56) References cited:
**EP-A1- 1 367 093** **EP-A1- 2 354 184**
**WO-A1-00/71615** **WO-A1-2011/131322**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to a polyethylene blend for injection moulded or compression moulded articles, in particular for the manufacture of caps and closures. The present invention also relates to an injection or compression moulded article comprising said blend and to the use of said blend for the production of an injection or compression moulded article such as a cap or closure. The blend of the invention comprises a bimodal high density polyethylene and a cyclic olefin copolymer (COC) which, when combined in particular weight ratios, enable the formation of injection or compression moulded articles with advantageous properties in terms of tensile modulus without loss of stress crack resistance and without causing shrinkage problems.

## Background

Injection moulding may be used to make a wide variety of articles including articles having relatively complex shapes and a range of sizes. Injection moulding is, for instance, suited to the manufacture of articles used as caps and closures for food and drink applications, such as for bottles containing carbonated or non-carbonated drinks, or for non-food applications like containers for cosmetics and pharmaceuticals. Caps and closures may, however, also be made by compression moulding.

To reduce weight and also save money (down gauging), the industry strives for lighter and thinner caps. Of course, these thinner caps must still possess the mechanical performance of current thicker caps. In order to achieve such performance, improvements of key parameters such as stiffness and toughness are necessary without compromising other properties like processability and gas permeability (especially for caps for a sparkling beverage). Another important property is the absence of shrinkage or warpage after formation.

The use of HDPE in cap production is well known. Moreover, the use of multimodal HDPE has also previously been suggested for use in cap production. Some commercial polymer grades for caps and closure applications are multimodal HDPEs. Multimodal HDPE copolymers for cap applications however have limited stiffness, typically having a tensile modulus value around 900 MPa. To produce thinner caps, stiffness needs to be higher.

The present inventors sought new HDPE blends, developed in particular for the cap and closure market, which possess improved (i.e. higher tensile modulus). To add to the challenge however, these improvements must not be at the expense of processability of the polymer or the appearance of any article formed. Thus, processability should be maintained or even improved to meet customer needs. Injection moulded articles are produced rapidly and any reduction in processability can increase cycle times and hence reduce process efficiency. Improvement in tensile modulus should also not be at the expense of ESCR and should not encourage warpage or shrinkage.

The present inventors have found surprisingly that bimodal HDPE combined with at least one COC offer an ideal solution to the problem of the invention. Remarkably, this combination, at particular weight ratios, enables very high tensile modulus values without loss of other critical properties.

The term COC refers to a cyclic olefin copolymer. These copolymers are based on the copolymerisation of ethylene or propylene with at least one cyclic comonomer. That cyclic comonomer is often a norbornene type compound. Such a COC compound is illustrated in scheme 1 below:

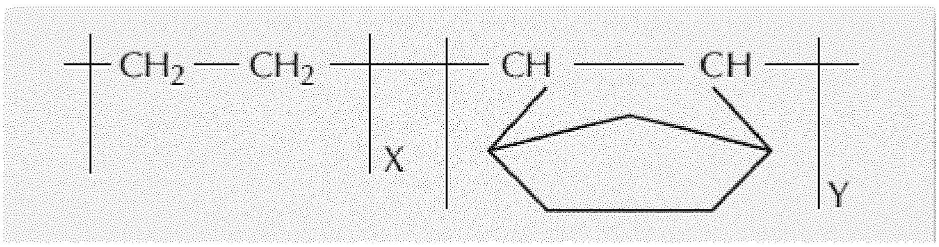

Scheme 1

In contrast with semi-crystalline polyethylene or polypropylene, COC polymers are totally amorphous. This class of polyolefins have been developed for various applications such as transparent mouldings for use in optical data storage. More recently, the COCs have been blended with polyethylenes for use as packaging of drugs, medical devices and diagnostic disposables. Blow moulded film products comprising COC are used in blister packs, shrink films and stand up pouches. The manufacturer also suggests its COC compounds for use in high voltage applications instead of PTFE.

There have also been suggestions for blends of COC with olefins. The combination of HDPE and COC has been shown to improve heat deflection temperature and tensile modulus (Topas Blend brochure).

Blends of cyclic olefin polymers and elastomers have been used to manufacture syringe caps. In US2010/0298779 a syringe cap made from a thermoplastic elastomer and a cyclic olefin polymer is described.

There are numerous disclosures of cyclic olefin polymers being used in film manufacture. In US2009/0020898, the combination of polyethylene and cyclic olefin polymers is said to reduce defect numbers in films.

JP2011025637 describes a multilayer film in which one layer comprises a cyclic olefin based resin, a lower density polyethylene and optionally an HDPE.

WO2013/101699 describes films in which alternating layers of cyclic olefin polymer and HDPE are employed.

JP2010-234660 describes a multilayer film in which one layer comprises a cyclic olefin based resin, a lower density polyethylene and optionally an HDPE.

JP05-230147 describes the production of certain cyclic olefin copolymers which are said to be useful in automotive part manufacture.

JP04-353540 and JP-01318052 describe blends of COCs and polyolefins such as polyethylene for moulding applications. The blends prevent scuff and scratch resistance suggesting that they are designed for automotive applications.

The present inventors have now realised that the combination of a bimodal HDPE and a COC polymer represents an ideal blend for a cap or closure. The use of COC resins causes an increase in stiffness of the HDPE. Remarkably however, this increase in tensile modulus can be achieved without significant reductions in other valuable cap mechanical properties, in particular ESCR. Furthermore, the manufacturers of COC products such as TOPAS suggest in their product literature (Topas blend brochure) that the addition of COC increases warpage and yet we observe less shrinkage in our caps than occurs using a conventional filler such as talc.

The combination therefore of bimodal HDPE and COC offers a new blend for cap and closure manufacture with remarkable properties. The combination therefore of a bimodal HDPE and COC offers excellent blend properties in terms of ESCR, stiffness and shrinkage, ideally tailored for cap and closure manufacture.

## Summary of Invention

Viewed from one aspect the invention provides a polymer composition comprising:

(A) at least 80 wt% of a bimodal high density polyethylene having a density of 940 kg/$m^3$ or more and an $MFR_{21}$ of 24 to 400 g/10min; and
(B) 1 to 14 wt% of a cyclic ethylene copolymer or cyclic propylene copolymer.

Viewed from another aspect the invention provides an injection or compression moulded article, preferably a cap or closure, comprising such as consisting of, a polymer composition comprising:

(A) at least 80 wt% of a bimodal high density polyethylene having a density of 940 kg/$m^3$ or more and an $MFR_{21}$ of 24 to 400 g/10min; and
(B) 1 to 14 wt% of a cyclic ethylene copolymer or cyclic propylene copolymer.

Viewed from another aspect the invention provides a process for the manufacture of an injection or compression moulded article such as a cap or closure, said process comprising blending, preferably in an extruder,

(A) at least 80 wt% of a bimodal high density polyethylene having a density of 940 kg/$m^3$ or more and an $MFR_{21}$ of 24 to 400 g/10min; and
(B) 1 to 14 wt% of a cyclic ethylene/propylene copolymer to form a polymer composition;
optionally pelletizing the polymer composition to form pellets; and
injection or compression moulding the formed pellets or polymer composition to form said article.

Viewed from another aspect the invention provides the use of a polymer composition as hereinbefore defined in injection or compression moulding, preferably for the manufacture of a cap or closure.

## Definitions

The polymer composition of the invention is also referred to herein as the polymer blend of the invention.

The term cyclic ethylene copolymer or cyclic propylene copolymer refers to a polymer obtained by the copolymerisation of ethylene or propylene with at least one cyclic monomer.

The term cyclic monomer refers to any polymerisable monomer which contains a ring in which a double bond is present within that ring, e.g. norbornene:

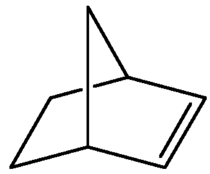

or derivatives thereof.

## Detailed Description of Invention

This invention relates to a polymer composition for use in the manufacture of compression moulded or injection moulded articles, in particular caps and closures. These caps and closures possess high stiffness without compromising on other mechanical properties, in particular ESCR and shrinkage properties. The blends of the invention contain at least one cyclic olefin copolymer called COCs herein. The copolymer has an olefin component which is derived from ethylene or propylene, preferably ethylene. That olefin is copolymerised with a cyclic monomer such as norbornene. Cyclic monomers comprise at least one ring, such as one ring, two rings or three rings that may be fused. The monomer must contain a polymerisable double bond and that double bond must be present within a ring structure. Styrene therefore is not a cyclic monomer according to the invention as its double bond is outside the ring and the double bonds of the phenyl ring are not polymerisable. Ideally, cyclic olefin monomers of interest will contain a bridgehead carbon atom. The total number of carbon atoms in a cyclic olefin monomer is ideally up to 20. Preferably, there should be no atoms other than C or H present in the monomer.

In theory two or more cyclic monomers can be used in the COC of the invention although ideally only one cyclic monomer is employed.

Cyclic monomers of interest include dihydrodicyclopentadiene, phenyl norbornene and derivatives thereof and tetracyclododecene. The cyclic olefin monomers are preferably derivatives of cyclopentadiene (CPD) or dicyclopentadiene (DCPD). Other cyclic olefins of interest include cyclohexene, 8,9,10-trinorborn-2-ene (norbornene) or 1,2,3,4,4a,5,8,8a-octahydro-1,4:5,8-dimethanonaphthalene.

Derivatives of norbornene of interest in the invention include 2-norbornene, 5-methyl-2-norbornene, 5,5-dimethyl-2-norbornene, 5-ethyl-2-norbornene, 5-butyl-2-norbornene, 5-ethylidene-2-norbornene, 5-phenyl-2-norbornene, 5-phenyl-5-methyl-2-norbornene, 5-hexyl-2-norbornene, 5-octyl-2-norbornene, and 5-octadecyl-2-norbornene. The use of norbornene itself is preferred.

In one embodiment, the copolymers are made from the polymerization of norbornene and ethylene/propylene by the ring-opening metathesis polymerization (ROMP). The polymers can be random or block.

Typically, in the COC polymer there is an excess of the cyclic monomer relative to the olefin present. Cyclic monomer content may therefore range from 50 to 95 wt% of the COC polymer. A preferred COC polymer is formed through the copolymerisation of norbornene and ethylene. COC polymers are commercial products and can be bought from suppliers such as Dow and TOPAS.

The COC can in some way be considered a filler type material. Unlike other fillers however such as talc, COC has low density. It is preferred if the density of the COC is in the range of 1000 to 1200 kg/m$^3$, such as 1000 to 1100 kg/m$^3$.

The COC polymers are known to have very high tensile modulus values and hence high rigidity, strength and hardness. The tensile modulus of the COC polymer is ideally at least 1800 MPa, such as at least 2000 MPa.

The $MFR_2$ of the COC polymer is preferably in the range of 0.1 to 10 g/10min, such as 0.5 to 8 g/10min, such as 1 to 5 g/10min.

The glass transition temperature of the COC polymer is ideally at least 65°C.

The COC polymers also generally possess high transparency, good heat resistance and high barrier resistance. They are also useable with food and drink.

### HDPE Component

The polymer composition of the invention comprises a bimodal high density ethylene polymer and may be an ethylene homopolymer or an ethylene copolymer. By ethylene copolymer is meant a polymer the majority by weight of which derives from ethylene monomer units. The comonomer contribution preferably is up to 10% by mol, more preferably up to 5 % by mol. Ideally however there are very low levels of comonomer present in the polymers of the present invention such as 0.1 to 2 mol%, e.g. 0.1 to 1 mol%.

The other copolymerisable monomer or monomers are preferably C3-20, especially C3-10, alpha olefin comonomers, particularly singly or multiply ethylenically unsaturated comonomers, in particular C3-10-alpha olefins such as propene, but-1-ene, hex-1-ene, oct-1-ene, and 4-methyl-pent-1-ene. The use of hexene and butene is particularly preferred. Ideally there is only one comonomer present.

It is preferred if the polymer of the invention is a copolymer and therefore comprises ethylene and at least one comonomer. Ideally that comonomer is 1-butene.

The HDPE polymer of the invention is bimodal and therefore comprises two components. The HDPE polymer of the invention preferably comprises

(A) a lower molecular weight first ethylene homo- or copolymer component, and
(B) a higher molecular weight second ethylene homo- or copolymer component.

It is generally preferred if the higher molecular weight component has an Mw of at least 5000 more than the lower molecular weight component, such as at least 10,000 more.

The HDPE of the invention is bimodal. Usually, a polyethylene comprising at least two polyethylene fractions, which have been produced under different polymerisation conditions resulting in different (weight average) molecular weights and molecular weight distributions for the fractions, is referred to as "multimodal". Accordingly, in this sense the HDPE of the invention is multimodal. The prefix "multi" relates to the number of different polymer fractions the HPE consists of. Thus, for example, a HDPE consisting of two fractions only is called "bimodal".

The form of the molecular weight distribution curve, i.e. the appearance of the graph of the polymer weight fraction as function of its molecular weight, of such a bimodal polyethylene will show two maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

The HDPE polymer of the invention preferably has an $MFR_2$ of 10 g/10 min or less, preferably 5 g/10min or less, such as 4 g/10min or less, more preferably 3 g/10min or less, especially 2 g/10min or less. The polymer preferably has a minimum $MFR_2$ of 0.1 g/10min, such as 0.3 g/10 min or more. The range 0.1 to 5 g/10min, especially 0.5 to 3 g/10min.

The HDPE polymer of the invention preferably has an $MFR_{21}$ of 24 to 400 g/10min, more preferably 40 to 320 g/10min, most preferably 40 to 180 g/10min.

The density of the HDPE polymer preferably is 940 kg/m$^3$ or more. The polymers of the invention are therefore high density polyethylenes, HDPE. More preferably, the HDPE polymer has a density of 945 kg/m$^3$ or more, still more preferably is 950 kg/m$^3$ or more.

Furthermore, the density of the HDPE polymer preferably is 970 kg/m$^3$ or lower, and more preferably is 965 kg/m$^3$ or lower, such as 960 kg/m$^3$ or lower. An ideal density range is 950 to 960 kg/m$^3$.

Preferably, the HDPE polymer has a tensile modulus of at least 850 MPa, more preferably at least 910 MPa. Typically, the HDPE has a tensile modulus of less than 970 MPa, such as less than 950 MPa.

The HDPE polymer preferably has an environmental stress crack resistance measured as FNCT of 30 h or more, more preferably 35 h or more.

It will be appreciated that the molecular weight and molecular distribution of the polymers of the invention is important. The HDPE polymer preferably has a molecular weight distribution Mw/Mn, being the ratio of the weight average molecular weight Mw and the number average molecular weight Mn, of 10 or more, more preferably of 12 or more, still more preferably of 14 or more.

The HDPE polymer preferably has an Mw/Mn of 30 or below, more preferably of 25 or below.

The weight average molecular weight Mw of the HDPE polymer preferably is at least 50 kD, more preferably at least 80 kD, and most preferably at least 100 kD. Furthermore, the Mw of the HDPE preferably is at most 300 kD, more preferably 275 kD.

As noted above, the HDPE of use in the invention preferably comprise a lower molecular weight component (A) and a higher molecular weight component (B). The weight ratio of fraction (A) to fraction (B) in the HDPE is in the range 30:70 to 70:30, more preferably 35:65 to 65:35, most preferably 40:60 to 60:40. In some embodiments the ratio may be 45 to 55 wt% of fraction (A) and 55 to 45 wt% fraction (B), such as 45 to 52 wt% of fraction (A) and 55 to 48 wt% fraction (B). It has been found however that the best results are obtained when the HMW component is present at the same percentage or even predominates, e.g. 50 to 54 wt% of the HMW component (B) and 50 to 46 wt% fraction (A).

Fractions (A) and (B) may both be ethylene copolymers or ethylene homopolymers, although preferably at least one of the fractions is an ethylene copolymer. Preferably, the polymer comprises an ethylene homopolymer and an ethylene copolymer component.

Where one of the components is an ethylene homopolymer, this is preferably the component with the lower weight average molecular weight (Mw), i.e. fraction (A). An ideal polymer is therefore a lower molecular weight homopolymer component (A) with a higher molecular weight component (B), ideally an ethylene butene higher molecular weight

component.

The lower molecular weight fraction (A) preferably has an $MFR_2$ of 10 g/10min or higher, more preferably of 50 g/10min or higher, and most preferably 100 g/10min or higher.

Furthermore, fraction (A) preferably, has an $MFR_2$ of 1000 g/10 min or lower, preferably 800 g/10 min or lower, and most preferably 600 g/10min or lower.

The weight average molecular weight Mw of fraction (A) preferably is 10 kD or higher, more preferably is 20 kD or higher. The Mw of fraction (A) preferably is 90 kD or lower, more preferably 80 kD or lower, and most preferably is 70 kD or lower.

Preferably, fraction (A) is an ethylene homo- or copolymer with a density of at least 965 $kg/m^3$.

Most preferably, fraction (A) is an ethylene homopolymer. If fraction (A) is a copolymer, the comonomer is preferably 1-butene.

The higher molecular weight fraction (B) preferably has an Mw of 60 kD or higher, more preferably of 100 kD or higher. Furthermore, fraction (B) preferably has an Mw of 500 kD or lower, more preferably of 400 kD or lower.

Preferably, fraction (B) is an ethylene homo- or copolymer with a density of less than 965 $kg/m^3$.

Most preferably, fraction (B) is a copolymer. Preferred ethylene copolymers employ alpha-olefins (e.g. C3-12 alpha-olefins) as comonomers. Examples of suitable alpha-olefins include but-1-ene, hex-1-ene and oct-1-ene. But-1-ene is an especially preferred comonomer.

Where herein features of fractions (A) and/or (B) of the HDPE of the present invention are given, these values are generally valid for the cases in which they can be directly measured on the respective fraction, e.g. when the fraction is separately produced or produced in the first stage of a multistage process. However, the HDPE may also be and preferably is produced in a multistage process wherein e.g. fractions (A) and (B) are produced in subsequent stages. In such a case, the properties of the fractions produced in the second step (or further steps) of the multistage process can either be inferred from polymers, which are separately produced in a single stage by applying identical polymerisation conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e.g. in accordance with B. Hagström, Conference on Polymer Processing (The Polymer Processing Society), Extended Abstracts and Final Programme, Gothenburg, August 19 to 21, 1997, 4:13.

Thus, although not directly measurable on the multistage process products, the properties of the fractions produced in higher stages of such a multistage process can be determined by applying either or both of the above methods. The skilled person will be able to select the appropriate method.

A bimodal polyethylene as hereinbefore described may be produced by mechanical blending two polyethylenes (e.g. monomodal polyethylenes) having differently centred maxima in their molecular weight distributions. The monomodal polyethylenes required for blending may be available commercially or may be prepared using any conventional procedure known to the skilled man in the art. Each of the polyethylenes used in a blend and/or the final polymer may have the properties hereinbefore described for the lower molecular weight component, higher molecular weight component and the HDPE, respectively.

The process for the manufacture of the HDPE preferably involves

polymerising ethylene and optionally at least one C3-10 alpha olefin comonomer so as to form a lower molecular weight component (A); and subsequently

polymerising ethylene and optionally at least one C3-10 alpha olefin comonomer in the presence of component (A) so as to form a higher molecular weight component (B).

It is preferred if at least one component is produced in a gas-phase reaction.

Further preferred, one of the fractions (A) and (B) of the polyethylene HDPE, preferably fraction (A), is produced in a slurry reaction, preferably in a loop reactor, and one of the fractions (A) and (B), preferably fraction (B), is produced in a gas-phase reaction.

Preferably, the bimodal polyethylene HDPE may be produced by polymerisation using conditions which create a bimodal polymer product, e.g. using a catalyst system or mixture with two different catalytic sites, each site obtained from its own catalytic site precursor, or using a two stage, i.e. multistage, polymerisation process with different process conditions in the different stages or zones (e.g. different temperatures, pressures, polymerisation media, hydrogen partial pressures, etc).

Preferably, the bimodal HDPE is produced by a multistage ethylene polymerisation, e.g. using a series of reactors, with optional comonomer addition preferably in only the reactor(s) used for production of the higher/highest molecular weight component(s) or differing comonomers used in each stage. A multistage process is defined to be a polymerisation process in which a polymer comprising two or more fractions is produced by producing each or at least two polymer fraction(s) in a separate reaction stage, usually with different reaction conditions in each stage, in the presence of the reaction product of the previous stage which comprises a polymerisation catalyst. The polymerisation reactions used in each stage may involve conventional ethylene homopolymerisation or copolymerisation reactions, e.g.

gas-phase, slurry phase, liquid phase polymerisations, using conventional reactors, e.g. loop reactors, gas phase reactors, batch reactors etc. (see for example WO97/44371 and WO96/18662).

Polymer HDPEs produced in a multistage process are also designated as *"in-situ"* blends.

Accordingly, it is preferred that fractions (A) and (B) of the HDPE are produced in different stages of a multistage process.

Preferably, the multistage process comprises at least one gas phase stage in which, preferably, fraction (B) is produced.

Further preferred, fraction (B) is produced in a subsequent stage in the presence of fraction (A) which has been produced in a previous stage.

It is previously known to produce multimodal, in particular bimodal, olefin polymers, such as multimodal polyethylene, in a multistage process comprising two or more reactors connected in series. As instance of this prior art, mention may be made of EP 517 868, which is hereby incorporated by way of reference in its entirety, including all its preferred embodiments as described therein, as a preferred multistage process for the production of the HDPE according to the invention.

Preferably, the main polymerisation stages of the multistage process for producing the HDPE according to the invention are such as described in EP 517 868, i.e. the production of fractions (A) and (B) is carried out as a combination of slurry polymerisation for fraction (A)/gas-phase polymerisation for fraction (B). The slurry polymerisation is preferably performed in a so-called loop reactor. Further preferred, the slurry polymerisation stage precedes the gas phase stage.

Optionally and advantageously, the main polymerisation stages may be preceded by a prepolymerisation, in which case up to 20 % by weight, preferably 1 to 10 % by weight, more preferably 1 to 5 % by weight, of the total HDPE is produced. The prepolymer is preferably an ethylene homopolymer (High Density PE). At the prepolymerisation, preferably all of the catalyst is charged into a loop reactor and the prepolymerisation is performed as a slurry polymerisation. Such a prepolymerisation leads to less fine particles being produced in the following reactors and to a more homogeneous product being obtained in the end.

The polymerisation catalysts include coordination catalysts of a transition metal, such as Ziegler-Natta (ZN), metallocenes, non-metallocenes, Cr-catalysts etc. The catalyst may be supported, e.g. with conventional supports including silica, Al-containing supports and magnesium dichloride based supports. Preferably the catalyst is a ZN catalyst, more preferably the catalyst is silica supported ZN catalyst.

The Ziegler-Natta catalyst further preferably comprises a group 4 (group numbering according to new IUPAC system) metal compound, preferably titanium, magnesium dichloride and aluminium.

The catalyst may be commercially available or be produced in accordance or analogously to the literature. For the preparation of the preferable catalyst usable in the invention reference is made to WO2004055068 and WO2004055069 of Borealis, EP 0 688 794 and EP 0 810 235. The content of these documents in its entirety is incorporated herein by reference, in particular concerning the general and all preferred embodiments of the catalysts described therein as well as the methods for the production of the catalysts. Particularly preferred Ziegler-Natta catalysts are described in EP 0 810 235.

The resulting end product consists of an intimate mixture of the polymers from the two reactors, the different molecular-weight-distribution curves of these polymers together forming a molecular-weight-distribution curve having a broad maximum or two maxima, i.e. the end product is a bimodal polymer mixture.

It is preferred that the base resin, i.e. the entirety of all polymeric constituents, of the HDPE according to the invention is a bimodal polyethylene mixture consisting of fractions (A) and (B), optionally further comprising a small prepolymerisation fraction in the amount as described above. It is also preferred that this bimodal polymer mixture has been produced by polymerisation as described above under different polymerisation conditions in two or more polymerisation reactors connected in series. Owing to the flexibility with respect to reaction conditions thus obtained, it is most preferred that the polymerisation is carried out in a loop reactor/a gas-phase reactor combination.

Preferably, the polymerisation conditions in the preferred two-stage method are so chosen that the comparatively low-molecular polymer having no content of comonomer is produced in one stage, preferably the first stage, owing to a high content of chain-transfer agent (hydrogen gas), whereas the high-molecular polymer having a content of comonomer is produced in another stage, preferably the second stage. The order of these stages may, however, be reversed.

In the preferred embodiment of the polymerisation in a loop reactor followed by a gas-phase reactor, the polymerisation temperature in the loop reactor preferably is 85 to 115 °C, more preferably is 90 to 105 °C, and most preferably is 92 to 100 °C, and the temperature in the gas-phase reactor preferably is 70 to 105 °C, more preferably is 75 to 100°C, and most preferably is 82 to 97°C.

A chain-transfer agent, preferably hydrogen, is added as required to the reactors, and preferably 100 to 800 moles of H2/kmoles of ethylene are added to the reactor, when the LMW fraction is produced in this reactor, and 50 to 500 moles of H2/kmoles of ethylene are added to the gas phase reactor when this reactor is producing the HMW fraction.

In the production of the HDPE of the present invention, preferably a compounding step is applied, wherein the composition of the base resin, i.e. the blend, which is typically obtained as a base resin powder from the reactor, is

extruded in an extruder and then pelletised to polymer pellets in a manner known in the art.

The polyethylene composition may also contain minor quantities of additives such as pigments, nucleating agents, antistatic agents, fillers, antioxidants, etc., generally in amounts of up to 5 % by weight, preferably up to 2 % by weight, such as up to 1 wt%.

Optionally, additives or other polymer components can be added to the HDPE during the compounding step in the amount as described above. Preferably, the HDPE obtained from the reactor is compounded in the extruder together with additives in a manner known in the art.

**Blend Properties**

The blend of the invention comprises 1 to 14 wt% of the COC polymer, preferably 1 to 10 wt% of the COC polymer. If the amount of COC polymer is greater than 14 wt%, then the homogeneity of the blend is compromised and we observe a reduction in toughness.

It is preferred if there is 3 to 10 wt% of the COC polymer present such as 4 to 8 wt%.

The HDPE polymer is present in an amount of at least 80 wt%, such as at least 85 wt% of the blend. Ideally there is 89wt% or more of the HDPE. Values of 92 wt% to 94wt% HDPE are also envisaged.

It will be appreciated that the blends can contain an additive package which typically forms up to 1 wt% of the blend which may be added as part of the HDPE, part of the COC component or separately.

The blend of the invention may also be combined with other polymer components such as other HDPEs or with other polymers such as LLDPE or LDPE. Ideally however, no such additional components are present.

The blend of the invention preferably has a tensile modulus of at least 1000 MPa, preferably at least 1050 MPa, especially 1100MPa or more. The tensile modulus is ideally at least 50 MPa higher than the tensile modulus of the HDPE used in the blend.

The blend of the invention preferably has an FNCT of no less than 90% of the FNCT of the HDPE used in the blend, such as no less than 95 % of FNCT of the HDPE used in the blend (i.e. if the FNCT of the HDPE is 40 hrs then the blend should have an FNCT of 36 hrs or more, ideally 38 hrs or more). FNCT values are ideally at least 30 h, such as at least 35 h.

The tensile at break values of the blend of the invention are ideally 400% or more..

The blend of the invention can be pelletizing in an extruder to form a composition in pellet form.

The blend of the invention can be used to make injection and compression moulded articles. Articles of the invention such as caps and closures preferably comprise at least 90 wt% of the blend of the invention such as at least 95 wt% of the blend. In one embodiment, the articles consist of the blend of the invention.

**Applications**

The present invention also relates to an injection or compression moulded article, preferably a cap or closure, comprising a polyethylene composition/blend as described above and to the use of such a polyethylene composition for the production of an injection or compression moulded article, preferably a cap or closure. Preferably, injection moulded articles are made.

Injection moulding of the composition hereinbefore described may be carried out using any conventional injection moulding equipment. A typical injection moulding process may be carried out a temperature of 190 to 275°C.

Still further, the present invention relates to a compression moulded article, preferably a caps or closure article, comprising a polyethylene polymer as described above and to the use of such a polyethylene polymer for the production of a compression moulded article, preferably a cap or closure.

Preferably, the composition of the invention is used for the production of a caps or closure article.

The caps and closures of the invention are preferably of conventional size, designed therefore for bottles and the like. They are approximately 2 to 8 cm in outer diameter (measured across the solid top of the cap) depending on the bottle and provided with a screw. Cap height might be 0.8 to 3 cm.

Caps and closure may be provided with tear strips from which the cap detaches on first opening as is well known in the art. Caps may also be provided with liners.

Caps may clip on or be screw caps, preferably screw caps. Screw-caps can be made to fit to bottle-neck PCO 1881 (new design), or an older bottle-neck standard, e.g. Neck PCO 1810 (also called PCO 28).

It will be appreciated that any parameter mentioned above is measured according to the detailed test given below. In any parameter where a narrower and broader embodiment are disclosed, those embodiments are disclosed in connection with the narrower and broader embodiments of other parameters.

The invention will now be described with reference to the following non limiting examples. The following materials are used in the examples and figures.

Figure 1 shows the variation of the tensile modulus versus amount of COC (in wt%).
Figure 2 show FNCT values for blends of the invention as a function of COC content relative to the HDPE polymer alone.
Figure 3 shows shrinkage properties of formed caps for the examples of the invention compared to the same HDPE combined with talc.

**Test Methods:**

**Melt Flow Rate**

The melt flow rate (MFR) is determined according to ISO 1133 and is indicated in g/10 min. The MFR is an indication of the melt viscosity of the polymer. The MFR is determined at 190°C for PE. The load under which the melt flow rate is determined is usually indicated as a subscript, for instance $MFR_2$ is measured under 2.16 kg load (condition D), $MFR_5$ is measured under 5 kg load (condition T) or $MFR_{21}$ is measured under 21.6 kg load (condition G).
The quantity FRR (flow rate ratio) is an indication of molecular weight distribution and denotes the ratio of flow rates at different loads. Thus, $FRR_{21/2}$ denotes the value of $MFR_{21}/MFR_2$.

**Density**

Density of the polymer was measured according to ISO 1183 / 1872-2B.
For the purpose of this invention the density of the blend can be calculated from the densities of the components according to:

$$\rho_b = \sum_i w_i \cdot \rho_i$$

where $\rho_b$ is the density of the blend,
$w_e$ is the weight fraction of component "i" in the blend and
$\rho_i$ is the density of the component "i".

**Comonomer Content (%wt and %mol)** was determined by using $^{13}C$-NMR. The $^{13}C$-NMR spectra were recorded on Bruker 400 MHz spectrometer at 130 °C from samples dissolved in 1,2,4-trichlorobenzene/benzene-$d_6$ (90/10 w/w). Conversion between %wt and %mol can be carried out by calculation.

**Molecular weight**

Molecular weight averages, molecular weight distribution (Mn, Mw,Mz MWD)
Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i / M_i)} \quad (1)$$

$$M_w = \frac{\sum_{i=1}^{N} (A_i x\, M_i)}{\sum_{i=1}^{N} A_i} \quad (2)$$

$$M_z = \frac{\sum_{i=1}^{N} (A_i\, x\, M_i^2)}{\sum_{i=1}^{N} (A_i / M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with either infrared (IR) detector (IR4 or IR5 from PolymerChar (Valencia, Spain) or differential refractometer (RI) from Agilent Technologies, equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 μL of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \text{ x } 10^{-3} \text{ mL/g}, \alpha_{PS} = 0.655$$

$$K_{PE} = 39 \text{ x } 10^{-3} \text{ mL/g}, \alpha_{PE} = 0.725$$

$$K_{PP} = 19 \text{ x } 10^{-3} \text{ mL/g}, \alpha_{PP} = 0.725$$

A third order polynomial fit was used to fit the calibration data.

All samples were prepared in the concentration range of 0,5 -1 mg/ml and dissolved at 160 °C for 2.5 hours for PP or 3 hours for PE under continuous gentle shaking.

## Tensile properties

Tensile properties were measured on injection moulded samples according to ISO 527-2, Specimen type Multipurpose bar 1A, 4 mm thick. Tensile modulus was measured at a speed of 1 mm/min. Sample preparation was done acc ISO 1872-2

## Environmental Stress Crack Resistance

Environmental Stress Crack Resistance (ESCR) may be measured according to the full notch creep test method (FNCT) according to ISO/DIS 16770 at 50°C with a notch depth of 1 mm and specimen dimensions 6 mm x 6 mm x 90 mm. The solvent used was 2 wt% Arcopal N110 in deionized water. Compression moulded samples were employed (ISO 1872-2), cooling rate at compression moulding: 15 K/min. Time to failure ($t_f$) was measured at 4 different stress levels ($\sigma$) between 5-7 MPa. A plot of log($t_f$) vs. log($\sigma$) was fitted with a straight line and a equation of the form $log(t_f) = A\, log(\sigma)+B$. FNCT value at 6 MPa stress is then calculated based on linear interpolation using the equation.

## Examples

The following materials are used in the examples of the invention:

| Table 1 Grades employed**Grade** | **Density (in g/cm³)** | **MFR(190/2,16) (in g/10 min)** |
|---|---|---|
| **MB6561** | 0.953 | 1,6 |
| **TOPAS 8007F-400** | 1,02 | 2.0 |

MB6561 is a bimodal HDPE available from Borealis. TOPAS 8007F-400 is a cyclic olefin copolymer based on ethylene and norbornene sold by TOPAS advance polymers.

The blends of the invention have added 1500 ppm of an antioxidant package (100ppm Irganox 1010, 300 ppm

Irgafos 168, 1000 ppm CaSt) in order to avoid any degradation during the compounding step. The following blends are produced.

Table 2

| Product | Blend Ex-01 | Blend Ex-02 | Blend Ex-03 | Blend Comp. Ex-04 |
|---|---|---|---|---|
| MB6561 (in wt%) | 97,35 | 94,85 | 89,85 | 84,85 |
| Antioxidant (in wt%) | 0,15 | 0,15 | 0,15 | 0,15 |
| TOPAS 8007F-400 (in wt%) | 2,50 | 5,00 | 10,00 | 15,00 |
| Total (in wt%) | 100,00 | 100,00 | 100,00 | 100,00 |

The blends of the invention are prepared on a W&P ZSK40 line, double screw extruder, at 180 °C mass temperature and 150 rpm.

Blend analysis:

Table 3

| | MFR2 | MFR5 | FRR5/2 |
|---|---|---|---|
| Blend Ex-01 | 1,64 | 5,69 | 3,5 |
| Blend Ex-02 | 1,60 | 5,85 | 3,7 |
| Blend Ex-03 | 1,66 | 6,04 | 3,6 |
| C Blend Ex-04 | 1,70 | 6,14 | 3,6 |

**Mechanicals testing: Tensile modulus**

Tensile testing was conducted on injection moulded specimens at 23°C-room temperature.

A clear linear correlation is shown between the tensile modulus and the amount of COC added (See figure 1). With 5% of TOPAS 8007F-400, it is possible to have a tensile modulus around 1000 MPa. Higher tensile modulus can be achieved with even higher loadings.

**Tensile at break**

Tensile at break measurements are shown in table 4 showing a clear reduction in the toughness from blend

01 to blend 04.

Table 4

| | Tensile strength at break (MPa) |
|---|---|
| Blend Ex-01 | 430 |
| C Blend Ex-04 | 388 |

## ESCR

ESCR can be measured in many different ways. In the present examples, we have measured using a full notch creep test (FNCT)

## FNCT measurements

FNCT is measured on compression moulded specimens at 50 °C, in 2% Arcopal N110 solution. Four stress levels (5.25, 5.75, 6.25 and 6.75 MPa) were planned to evaluate the failure time. After the specimen fails real stress values were calculated based on measured cross section area and failure time at 6.0 MPa was calculated based on log-log linear regression. Such data processing is in agreement with ISO 16770.

Only two measurements instead of 4 were obtained for blend CEx-04 at stress levels lower than 6.0 MPa; the calculated stress at 6.0 MPa is not possible for this blend.

Table 5

| Compound | Calculated FNCT at 6 MPa (in hour) |
|---|---|
| Ex-1 | 38 |
| Ex-2 | 37 |
| Ex-3 | 35 |
| C. Ex-4 | - |

The HDPE grade used in the experiments here was tested and found to have an FNCT of 38 h. No significant change in FNCT is therefore observed. Results are presented graphically in figure 2. The lack of result for C. Ex 4 with 15% COC is indicative of inhomogeneity at such a level of COC. As the level of COC increases the homogeneity of the blend is reduced, most probably through the formation of two phases. This demixing phenomenon would have an impact on the polymer performance, especially on all toughness properties.

## Caps dimension

A further important feature of the caps is their resistance to shrinkage after moulding. With typical fillers such as talc, a degree of shrinkage is observed in a formed cap. In contrast, the use of COC shows almost no shrinkage. In figure 3, we show the inner circle diameter after cap formation for blends of the invention compared to a corresponding blend with talc (Talc 3.9 is Talc HAR T84 provided by Imerys, Talc 4.5 is Talc JETFINE 3CA provided by Imerys) as opposed to the COC polymer. The circle diameter based on the mould and no shrinkage should be between 22.25 to 22.55 mm. The caps of the invention barely shrink at all. The talc solution shrinks more.

## Claims

1. A polymer composition comprising:

   (A) at least 80 wt% of a bimodal high density polyethylene having a density of 940 $kg/m^3$ or more and an $MFR_{21}$ of 24 to 400 g/10min; and
   (B) 1 to 14 wt% of a cyclic ethylene copolymer or cyclic propylene copolymer.

2. A composition as claimed in claim 1 wherein there is 1 to 10 wt% of component (B), preferably 4 to 8 wt%.

3. A composition as claimed in any preceding claim having a tensile modulus of at least 1000 MPa, such as at least 1100 MPa.

4. A composition as claimed in any preceding claim wherein the cyclic copolymer is a cyclic ethylene copolymer.

5. A composition as claimed in any preceding claim wherein the cyclic copolymer is a copolymer of ethylene and norbornene.

6. A composition as claimed in any preceding claim wherein the cyclic copolymer comprises 50 to 95 wt% of a cyclic comonomer.

7. A composition as claimed in any preceding claim having an FNCT of at least 30 hrs, preferably at least 35 hrs.

8. A composition as claimed in any preceding claim wherein the bimodal high density polyethylene is a copolymer.

9. A composition as claimed in any preceding claim wherein the bimodal high density polyethylene has an $MFR_2$ of 0.1 to 5 g/10min.

10. A composition as claimed in any preceding claim wherein the bimodal high density polyethylene has a density of 950 to 960 $kg/m^3$.

11. A composition as claimed in any preceding claim wherein the bimodal high density polyethylene comprises a lower Mw ethylene homopolymer component and a higher Mw ethylene copolymer component, preferably a HMW ethylene 1-butene copolymer component.

12. An injection or compression moulded article, preferably a cap or closure, comprising such as consisting of, a polymer composition as claimed in claims 1 to 11.

13. A cap or closure comprising a polymer composition as claimed in claims 1 to 11.

14. A process for the manufacture of an injection or compression moulded article such as a cap or closure, said process comprising blending, preferably in an extruder,

    (A) at least 80 wt% of a bimodal high density polyethylene having a density of 940 $kg/m^3$ or more and an $MFR_{21}$ of 24 to 400 g/10min; and
    (B) 1 to 14 wt% of a cyclic ethylene/propylene copolymer to form a polymer composition;
    optionally pelletizing the polymer composition to form pellets; and
    injection or compression moulding the formed pellets or polymer composition to form said article.

15. Use of a polymer composition as claimed in claims 1 to 11 for injection or compression moulding, preferably for the manufacture of a cap or closure.

## Patentansprüche

1. Polymerzusammensetzung, umfassend:

   (A) mindestens 80 Gew.-% eines bimodalen Polyethylens mit hoher Dichte, das eine Dichte von 940 $kg/m^3$

oder mehr und einen $MFR_{21}$ von 24 bis 400 g/10 min aufweist; und
(B) 1 bis 14 Gew.-% eines cyclischen Ethylencopolymers oder cyclischen Propylencopolymers.

**2.** Zusammensetzung nach Anspruch 1, wobei die Komponente (B) mit 1 bis 10 Gew.-%, vorzugsweise mit 4 bis 8 Gew.-% vorliegt.

**3.** Zusammensetzung nach einem der vorhergehenden Ansprüche, die einen Zugmodul von mindestens 1000 MPa, wie zum Beispiel mindestens 1100 MPa aufweist.

**4.** Zusammensetzung nach einem der vorhergehenden Ansprüche, wobei das cyclische Copolymer ein cyclisches Ethylencopolymer ist.

**5.** Zusammensetzung nach einem der vorhergehenden Ansprüche, wobei das cyclische Copolymer ein Copolymer aus Ethylen und Norbornen ist.

**6.** Zusammensetzung nach einem der vorhergehenden Ansprüche, wobei das cyclische Copolymer 50 bis 95 Gew.-% von einem cyclischen Comonomer umfasst.

**7.** Zusammensetzung nach einem der vorhergehenden Ansprüche, die einen FNCT von mindestens 30 h, vorzugsweise mindestens 35 h aufweist.

**8.** Zusammensetzung nach einem der vorhergehenden Ansprüche, wobei das bimodale Polyethylen mit hoher Dichte ein Copolymer ist.

**9.** Zusammensetzung nach einem der vorhergehenden Ansprüche, wobei das bimodale Polyethylen mit hoher Dichte einen $MFR_2$ von 0,1 bis 5 g/10 min aufweist.

**10.** Zusammensetzung nach einem der vorhergehenden Ansprüche, wobei das bimodale Polyethylen mit hoher Dichte eine Dichte von 950 bis 960 $kg/m^3$ aufweist.

**11.** Zusammensetzung nach einem der vorhergehenden Ansprüche, wobei das bimodale Polyethylen mit hoher Dichte eine Ethylenhomopolymerkomponente mit geringerem Mw und eine Ethylencopolymerkomponente mit höherem Mw umfasst, vorzugsweise eine HMW Ethylen-1-Buten-Copolymerkomponente.

**12.** Spritzgegossener oder formgepresster Artikel, vorzugsweise ein Deckel oder Verschluss, umfassend eine, wie zum Beispiel bestehend aus einer, Polymerzusammensetzung nach den Ansprüchen 1 bis 11.

**13.** Deckel oder Verschluss, der eine Polymerzusammensetzung nach den Ansprüchen 1 bis 11 umfasst.

**14.** Verfahren zum Herstellen von einem spritzgegossenen oder formgepressten Artikel, wie zum Beispiel einem Deckel oder Verschluss, wobei das Verfahren das Folgende umfasst:

Mischen, vorzugsweise in einen Extruder, von

(A) mindestens 80 Gew.-% eines bimodalen Polyethylens mit hoher Dichte, das eine Dichte von 940 $kg/m^3$ oder mehr und einen $MFR_{21}$ von 24 bis 400 g/10 min aufweist; und
(B) 1 bis 14 Gew.-% eines cyclischen Ethylen/Propylencopolymers, um eine Polymerzusammensetzung zu bilden;

optional Pelletieren der Polymerzusammensetzung, um Pellets zu bilden; und
Spritzgießen oder Formpressen der gebildeten Pellets oder Polymerzusammensetzung, um den Artikel zu bilden.

**15.** Verwendung einer Polymerzusammensetzung nach den Ansprüchen 1 bis 11 zum Spritzgießen oder Formpressen, vorzugsweise für die Herstellung von einem Deckel oder einem Verschluss.

## Revendications

1. Composition de polymères comprenant :

   (A) au moins 80 % en poids d'un polyéthylène haute densité bimodal présentant une masse volumique de 940 kg/$m^3$ ou plus et un $MFR_{21}$ de 24 à 400 g/10 minutes ; et
   (B) 1 à 14 % en poids d'un copolymère cyclique d'éthylène ou d'un copolymère cyclique de propylène.

2. Composition selon la revendication 1, dans laquelle il y a 1 à 10 % en poids du composant (B), de préférence 4 à 8 % en poids.

3. Composition selon l'une quelconque des revendications précédentes, présentant un module en traction d'au moins 1000 MPa, comme au moins 1100 MPa.

4. Composition selon l'une quelconque des revendications précédentes, dans laquelle le copolymère cyclique est un copolymère cyclique d'éthylène.

5. Composition selon l'une quelconque des revendications précédentes, dans laquelle le copolymère cyclique est un copolymère d'éthylène et de norbornène.

6. Composition selon l'une quelconque des revendications précédentes, dans laquelle le copolymère cyclique comprend 50 à 95 % en poids d'un comonomère cyclique.

7. Composition selon l'une quelconque des revendications précédentes, présentant un FNCT d'au moins 30 heures, de préférence d'au moins 35 heures.

8. Composition selon l'une quelconque des revendications précédentes, dans laquelle le polyéthylène haute densité bimodal est un copolymère.

9. Composition selon l'une quelconque des revendications précédentes, dans laquelle le polyéthylène haute densité bimodal présente un $MFR_2$ de 0,1 à 5 g/10 minutes.

10. Composition selon l'une quelconque des revendications précédentes, dans laquelle le polyéthylène haute densité bimodal présente une masse volumique de 950 à 960 kg/$m^3$.

11. Composition selon l'une quelconque des revendications précédentes, dans laquelle le polyéthylène haute densité bimodal comprend un composant d'homopolymère d'éthylène à Mw plus bas et un composant de copolymère d'éthylène à Mw plus élevé, de préférence un composant de copolymère d'éthylène 1-butène HMW.

12. Article moulé par injection ou par compression, de préférence une capsule ou une fermeture, comprenant comme consistant en, une composition de polymères selon les revendications 1 à 11.

13. Capsule ou fermeture comprenant une composition de polymères selon les revendications 1 à 11.

14. Procédé de fabrication d'un article moulé par injection ou par compression, tel qu'une capsule ou une fermeture, ledit procédé comprenant le mélange, de préférence dans une machine d'extrusion,

    (A) d'au moins 80 % en poids d'un polyéthylène haute densité bimodal présentant une masse volumique de 940 kg/$m^3$ ou plus et un $MFR_{21}$ de 24 à 400 g/10 minutes ; et
    (B) de 1 à 14 % en poids d'un copolymère cyclique d'éthylène/propylène pour former une composition de polymères ;
    facultativement le pastillage de la composition de polymère pour former des pastilles ; et
    le moulage par injection ou par compression des pastilles formées ou de la composition de polymères pour former ledit article.

15. Utilisation d'une composition de polymères selon les revendications 1 à 11 pour un moulage par injection ou par compression, de préférence pour la fabrication d'une capsule ou une fermeture.

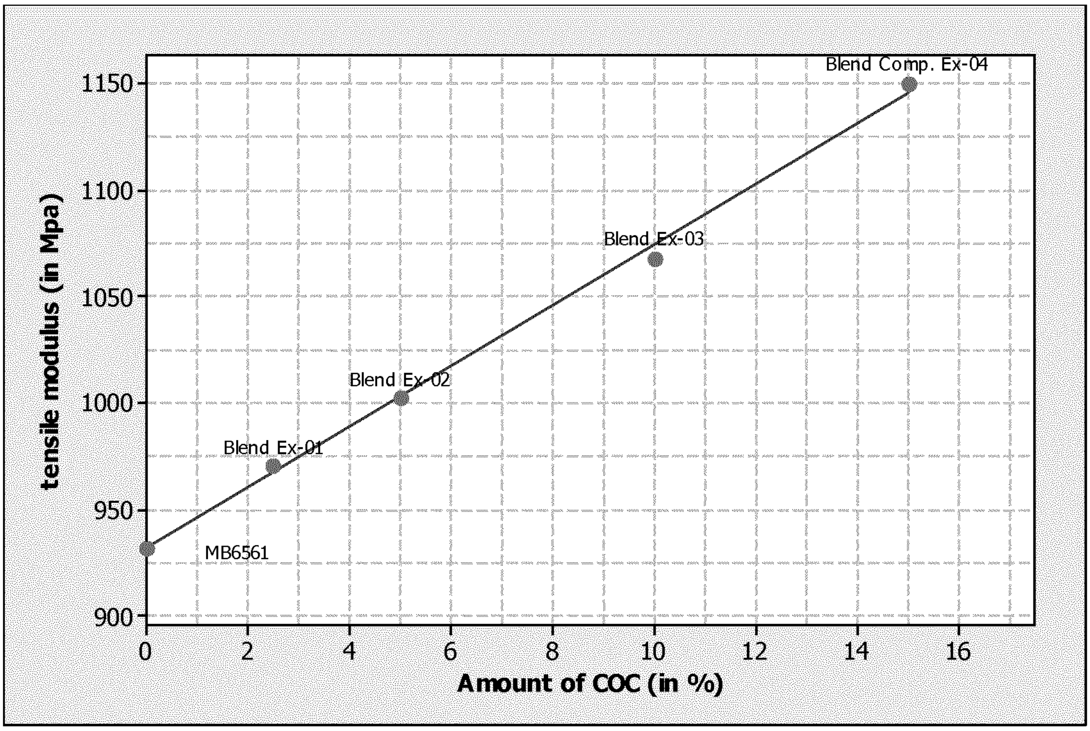
tensile modulus (in Mpa)
1150
1100
1050
1000
950
900
Blend Comp. Ex-04
Blend Ex-03
Blend Ex-02
Blend Ex-01
MB6561
0
2
4
6
8
10
12
14
16
Amount of COC (in %)

Figure 1

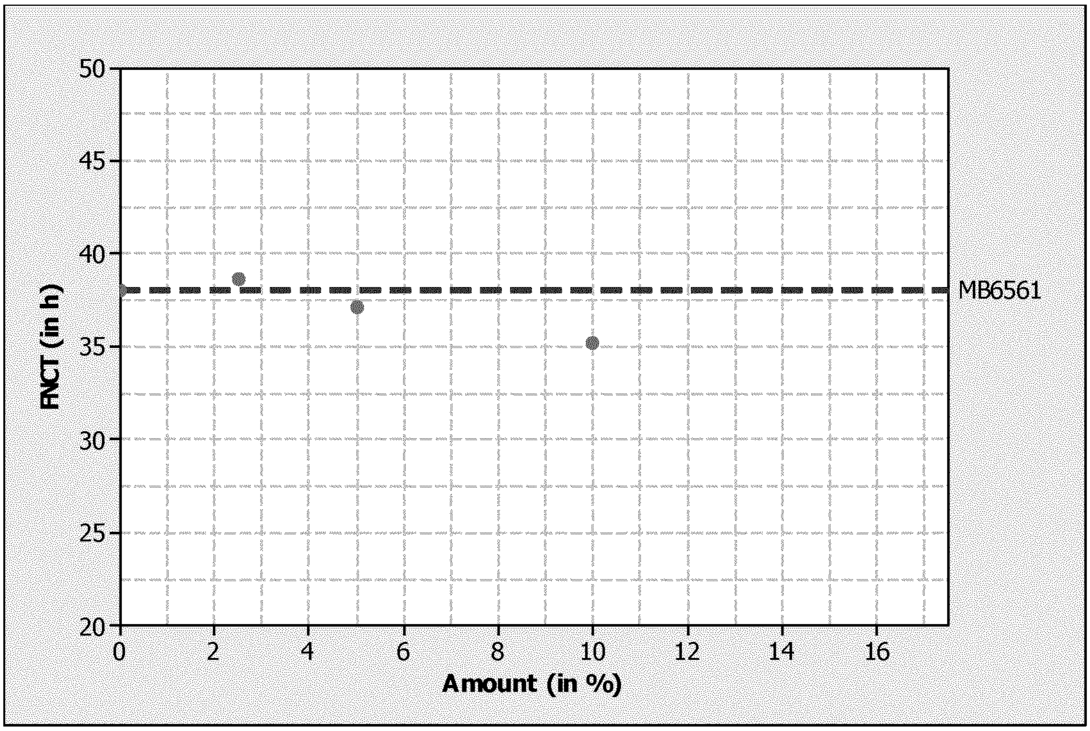


Figure 2

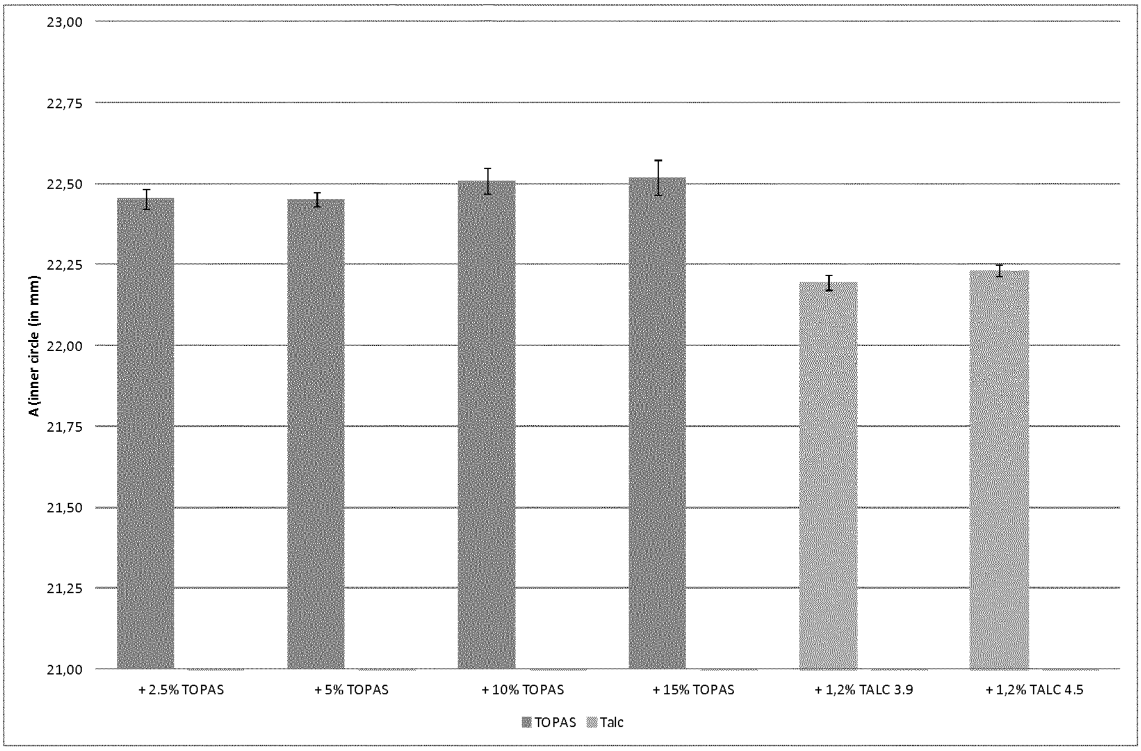


Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20100298779 A
- US 20090020898 A
- JP 2011025637 B
- WO 2013101699 A
- JP 2010234660 A
- JP 5230147 A
- JP 4353540 A
- JP 01318052 A
- WO 9744371 A
- WO 9618662 A
- EP 517868 A
- WO 2004055068 A
- WO 2004055069 A
- EP 0688794 A
- EP 0810235 A


### Non-patent literature cited in the description


- Extended Abstracts and Final Programme. **B. HAGSTRÖM.** Conference on Polymer Processing. The Polymer Processing Society, 19 August 1997, vol. 4, 13